# EUROPÄISCHE PATENTANMELDUNG

(11) **EP 1 748 286 A2**
(43) Veröffentlichungstag der Anmeldung: **31.01.2007**
(21) Anmeldenummer: 06013858.3
(22) Anmeldetag: 04.07.2006
(51) Int. Cl.: G01F 23/296, F17C 13/02

(54) **Befestigungsvorrichtung für einen Gasbehälter**

(30) Priorität: 28.07.2005 DE 102005035390
(71) Anmelder: STILL GMBH, D-22113 Hamburg (DE)
(72) Erfinder: Mey, Jörn, 23879 Mölln (DE); Schmohl, Thomas, 22085 Hamburg (DE)
(74) Vertreter: Lang, Michael

(57) **Zusammenfassung**

Gegenstand der Erfindung ist eine Befestigungsvorrichtung für einen Treibgasbehälter (3) an einem Gabelstapler, mit einer Aufnahme (2) für den Treibgasbehälter (3) und einer Füllstandsmesseinrichtung (9) zum Messen des Füllstandes im Treibgasbehälter. Erfindungsgemäß ist die Füllstandsmesseinrichtung (9) relativ zum Gabelstapler ortsfest angeordnet und ist die Aufnahme (2) für den Treibgasbehälter (3) relativ zu dem Gabelstapler bewegbar. Hierdurch wird erreicht, dass der in der Aufnahme (2) befindliche Treibgasbehälter (3) durch Bewegen der Aufnahme (2) in Kontakt mit der Füllstandsmesseinrichtung (9) bringbar ist. Die Aufnahme (2) ist federnd in eine Position vorgespannt, in der die Füllstandsmesseinrichtung (9) von dem Treibgasbehälter (3) beabstandet ist.

## Beschreibung

Die Erfindung betrifft eine Befestigungsvorrichtung für einen Treibgasbehälter an einem Gabelstapler, mit einer Aufnahme für den Treibgasbehälter und einer Füllstandsmesseinrichtung zum Messen des Füllstandes im Treibgasbehälter.

Ebenfalls betrifft die Erfindung eine Befestigungsvorrichtung für einen Treibgasbehälter an einem Gabelstapler, mit einer Aufnahme für den Treibgasbehälter und einer Füllstandsmesseinrichtung zum Messen des Füllstandes im Treibgasbehälter, wobei die Füllstandsmesseinrichtung relativ zum Gabelstapler bewegbar ist und die Aufnahme für den Treibgasbehälter relativ zu dem Gabelstapler ortsfest angeordnet ist, und wobei ein Mittel zum Fixieren des Treibgasbehälters in der Aufnahme vorgesehen ist, welches ein Spannelement umfasst, welches derart angeordnet ist, dass der Treibgasbehälter durch Spannen des Spannelements in Kontakt mit der Füllstandsmesseinrichtung bringbar ist.

Gabelstapler der genannten Art weisen einen Verbrennungsmotor auf, der mit Treibgas betrieben wird. Bei dem Treibgas, das auch als Flüssiggas oder als LPG (Liquid Petroleum Gas) bezeichnet wird, handelt es sich um Propan- und/oder Butangas. Das Treibgas wird üblicherweise in einem auswechselbaren Treibgasbehälter, in der Regel einer Gasflasche, auf dem Gabelstapler mitgeführt. Dieser Treibgasbehälter wird mittels einer geeigneten Befestigungsvorrichtung in der Regel auf einem Heckgewicht des Gabelstaplers befestigt.

Um einen ökonomischen Einsatz des Gabelstaplers zu ermöglichen, ist es wünschenswert, der Bedienperson des Gabelstaplers fortlaufend eine Information über den Füllstand des Treibgasbehälters zur Verfügung zu stellen. Es kann dadurch vermieden werden, dass der Gabelstapler wegen Treibstoffmangels liegen bleibt oder dass der Treibgasbehälter zu früh, mit einer noch erheblichen Restfüllmenge gewechselt wird.

Eine für den Einsatz in Gabelstaplern geeignete Füllstandsmesseinrichtung ist beispielsweise aus der DE 198 20 482 C1 bekannt. Um ein korrektes Messen des Füllstands des Treibgasbehälters zu ermöglichen, muss die Füllstandsmesseinrichtung an der Unterseite des Treibgasbehälters anliegen.

Aus der DE 103 31 044 A1 ist eine Befestigungsvorrichtung für einen Treibgasbehälter bekannt, mit der der Treibgasbehälter auf dem Gabelstapler fixiert und gleichzeitig die Füllstandsmesseinrichtung an den Treibgasbehälter angedrückt werden kann. Diese bekannte Befestigungsvorrichtung stellt sicher, dass die Füllstandsmesseinrichtung während eines Wechselns des Treibgasbehälters nicht durch den Treibgasbehälter beschädigt wird. Das Befestigen des Treibgasbehälters auf der Aufnahme gestaltet sich jedoch aufwändig und erfordert die Zuhilfenahme beider Hände der Bedienperson.

Der vorliegenden Erfindung liegt die Aufgabe zugrunde, eine Befestigungsvorrichtung zur Verfügung zu stellen, mit der ein Befestigen des Treibgasbehälters und ein Anlegen der Füllstandsmesseinrichtung an den Treibgasbehälter mit wenigen einfachen Handgriffen möglich ist.

Diese Aufgabe wird gemäß einer ersten Ausgestaltung der Erfindung dadurch gelöst, dass die Füllstandsmesseinrichtung relativ zum Gabelstapler ortsfest angeordnet ist und die Aufnahme für den Treibgasbehälter relativ zu dem Gabelstapler bewegbar ist, derart, dass der in der Aufnahme befindliche Treibgasbehälter durch Bewegen der Aufnahme in Kontakt mit der Füllstandsmesseinrichtung bringbar ist. Die Aufnahme ist dabei während des Wechselns des Treibgasbehälters von der Füllstandsmesseinrichtung beabstandet. Der Treibgasbehälter kann so auf die Aufnahme aufgelegt werden, ohne dass die Gefahr eines Anstoßens an die Füllstandsmesseinrichtung besteht. Anschließend wird der Treibgasbehälter gemeinsam mit der Aufnahme in Richtung der Füllstandsmesseinrichtung bewegt, bis die Unterseite des Treibgasbehälters auf der Füllstandsmesseinrichtung aufliegt.

Vorteilhaft ist es dabei, wenn die Aufnahme federnd in eine Position vorgespannt ist, in der die Füllstandsmesseinrichtung von dem Treibgasbehälter beabstandet ist. Die federnde Vorspannung der Aufnahme ist so ausgelegt, dass auch die Gewichtskraft eines vollen Treibgasbehälters nicht ausreicht, um die Aufnahme in Richtung der Füllstandsmesseinrichtung zu bewegen. Stattdessen wird die hierfür erforderliche Kraft mittels einer geeigneten Vorrichtung gezielt auf den Treibgasbehälter oder auf die Aufnahme ausgeübt.

Gemäß einer zweckmäßigen Ausgestaltung der Erfindung ist ein Mittel zum Fixieren des Treibgasbehälters in der Aufnahme vorgesehen, welches ein Spannelement umfasst. Das Spannelement kann beispielsweise von einem Gurtspanner, aber auch von einem zwischen zwei nicht flexiblen Bauteilen angeordneten Spannverschluss gebildet sein.

Mit besonderem Vorteil ist das Spannelement derart angeordnet, dass der Treibgasbehälter durch Spannen des Spannelements in Kontakt mit der Füllstandsmesseinrichtung bringbar ist. Das Spannelement erfüllt damit zwei unterschiedliche Funktionen, nämlich das Befestigen des Treibgasbehälters auf der Aufnahme und das Bewegen der Aufnahme gemeinsam mit dem Treibgasbehälter in Richtung der Füllstandsmesseinrichtung. Mittels der Kraft des Spannelements wird dabei die federnde Vorspannung der Aufnahme überwunden.

Das Befestigen des Spannelements kann von der Bedienperson mit einer Hand durchgeführt werden, wenn das Spannelement einen beweglich angeordneten Schnellspannverschluss und einen relativ zum Gabelstapler ortsfest angeordneten Haken umfasst. Die Bedienperson greift das Spannelement, hängt dieses in den ortsfesten Haken ein und betätigt daraufhin das Spannelement.

Zweckmäßig ist es weiter, wenn das Mittel zum Fixieren des Treibgasbehälters einen gelenkig gelagerten Deckel umfasst, an welchem das Spannelement befestigt ist. Der Deckel ist vorzugsweise aus Blech ausgebildet und kann um ein Scharniergelenk geschwenkt werden. Der Deckel definiert damit jederzeit die Position des Schnellspannverschlusses.

Bezüglich der Befestigungsvorrichtung mit der ortsfest angeordneten Aufnahme wird die eingangs genannte Aufgabe dadurch gelöst, dass das Spannelement einen beweglich angeordneten Schnellspannverschluss und einen relativ zum Gabelstapler ortsfest angeordneten Haken umfasst. Durch den ortsfest angeordneten Haken wird erreicht, dass das Spannelements ebenfalls mit einer Hand betätigt werden kann. Auch hier dient das Spannelement zum Befestigen des Treibgasbehälters auf der Aufnahme und zum Andrücken der Füllstandsmesseinrichtung an den Treibgasbehälter.

Zweckmäßigerweise umfasst das Mittel zum Fixieren des Treibgasbehälters einen gelenkig gelagerten Deckel, an welchem der Schnellspannverschluss befestigt ist. Der Deckel besteht vorzugsweise aus Metallblech und ist mittels Scharniergelenken gelagert. Bei einem Bewegen des Deckels wird der Schnellspannverschluss mitbewegt.

Gemäß einer zweckmäßigen Ausgestaltungsform ist die Füllstandsmesseinrichtung mittels eines flexiblen Zugelements, beispielsweise mittels eines Stahlbandes oder eines Gurts mit dem Schnellspannverschluss verbunden. Das Zugelement überträgt eine Bewegung des Schnellspannverschlusses direkt oder indirekt auf die Füllstandsmesseinrichtung. Bei entsprechender Einstellung und Ausrichtung dieser Bauteile wird die Füllstandsmesseinrichtung genau dann an den Treibgasbehälter angedrückt, wenn das Spannelement geschlossen ist.

Wenn ein Deckel für den Treibgasbehälter vorhanden ist, ist es besonders günstig, wenn das flexible Zugelement einerseits mit der Füllstandsmesseinrichtung und andererseits mit dem Deckel verbunden ist. Da der Deckel aufgrund seiner Schamierlagerung nur definierte Bewegungen ausführen kann, wird das Zugelement bei einem Bewegen des Deckels ebenfalls definiert bewegt.

Weitere Vorteile und Einzelheiten der Erfindung werden anhand der in den schematischen Figuren dargestellten Ausführungsbeispiele näher erläutert. Dabei zeigt
- Figur 1: die Ausführung der Befestigungsvorrichtung mit beweglicher Aufnahme in geöffneter Stellung,
- Figur 2: dieselbe Ausführung in geschlossener Stellung,
- Figur 3: die Ausführung der Befestigungsvorrichtung mit beweglicher Füllstandsmesseinrichtung.

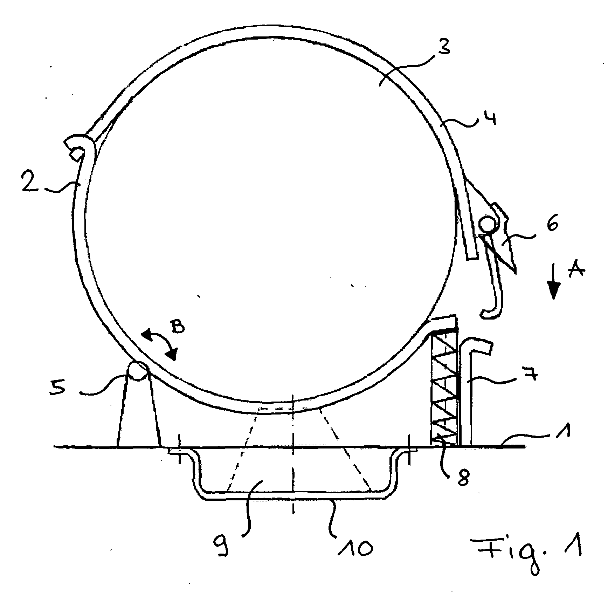

Figur 1 zeigt die Ausführung der erfindungsgemäßen Befestigungsvorrichtung mit beweglicher Aufnahme in geöffneter Stellung. Die gesamte Befestigungsvorrichtung ist auf einer Grundplatte 1 angeordnete, welche von einem Rahmenteil des Gabelstaplers oder von einem separaten, beispielsweise an einem Heckgewicht des Gabelstaplers befestigten Bauteil gebildet sein kann. An der Grundplatte 1 ist mittels eines Halters 10 eine Füllstandsmesseinrichtung 9 für einen Treibgasbehälter 3 befestigt. Die Füllstandsmesseinrichtung 9 umfasst einen Ultraschallsensor, mit dem der Flüssigkeitsstand im Treibgasbehälter 3 gemessen werden kann, wenn dieser auf der Oberseite der Füllstandsmesseinrichtung 9 aufliegt.

Die Befestigungsvorrichtung umfasst eine Aufnahme 2 für den liegend angeordneten, von einer Gasflasche gebildeten Treibgasbehälter 3. Die Aufnahme 2 kann gemeinsam mit dem Treibgasbehälter 3 um eine Achse 5 geschwenkt werden. Der Doppelpfeil B verdeutlicht die mögliche Schwenkbewegung der Aufnahme 2. In der dargestellten Position ist das in der Zeichnung rechte Ende der Aufnahme 3 mittels der Kraft einer Feder 8 nach oben gedrückt, sodass der Treibgasbehälter 3 von der Oberseite der Füllstandsmesseinrichtung 9 beabstandet ist. In dieser Position der Aufnahme 3 kann der Treibgasbehälter 3 gewechselt werden, ohne dass die Gefahr einer Beschädigung der Füllstandsmesseinrichtung 9 durch ein Bewegen des Treibgasbehälters 3 besteht.

An dem in der Zeichnung linken Ende der Aufnahme ist ein Deckel 4 gelenkig gelagert, der im vorliegenden Ausführungsbeispiel von einem gebogenen Metallblech gebildet ist. Der Deckel 4 kann nach oben weggeschwenkt werden, wodurch eine Bedien- oder Wartungsperson einen freien Zugang zu dem Treibgasbehälter erhält. Während des Betriebs des Gabelstaplers ist der Deckel 4 mittels eines Schnellspannverschlusses 6 an einem an der Grundplatte 1 angeordneten Haken 7 verriegelt. Die mit dem Schnellspannverschluss 6 erzeugte Kraft wirkt über den Deckel 4 und den Treibgasbehälter 3 auf die Aufnahme 2, welche sich daraufhin während des Schließens des Schnellspannverschlusses 6 nach unten bewegt. Der Treibgasbehälter 3 wird dabei auf die Füllstandmesseinrichtung 9 gedrückt, sodass während des Betriebs des Gabelstaplers eine fortlaufende Füllstandsmessung erfolgen kann.

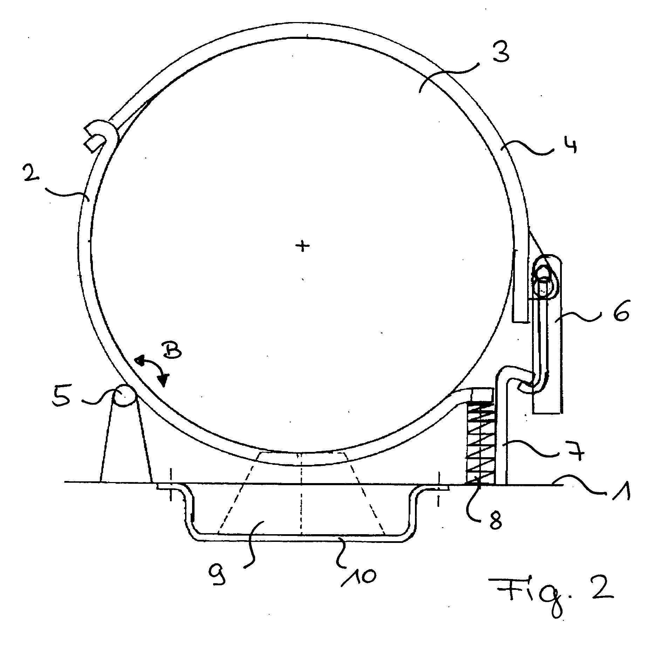

Figur 2 zeigt die Anordnung gemäß Fig. 1 mit verriegeltem Deckel. Es ist zu erkennen wie der Schnellspannverschluss 6 die Aufnahme 2 und den Treibgasbehälter 3 entgegen der Kraft der Feder nach unten zieht. Der Treibgasbehälter 2 liegt satt auf der Füllstandsmesseinrichtung 9 auf, an deren Oberseite ein elastisches Element angeordnet ist, welches infolge der Kraft des Schnellspannverschlusses 6 ebenfalls zusammengedrückt ist.

Die vorliegende Anordnung ermöglicht ein einfaches Verriegeln des Treibgasbehälters 3 mit einem Handgriff. Gleichzeitig ist automatisch gewährleistet, dass sich der Treibgasbehälter 3 relativ zu der Füllstandsmesseinrichtung 9 in einer korrekten Position befindet.

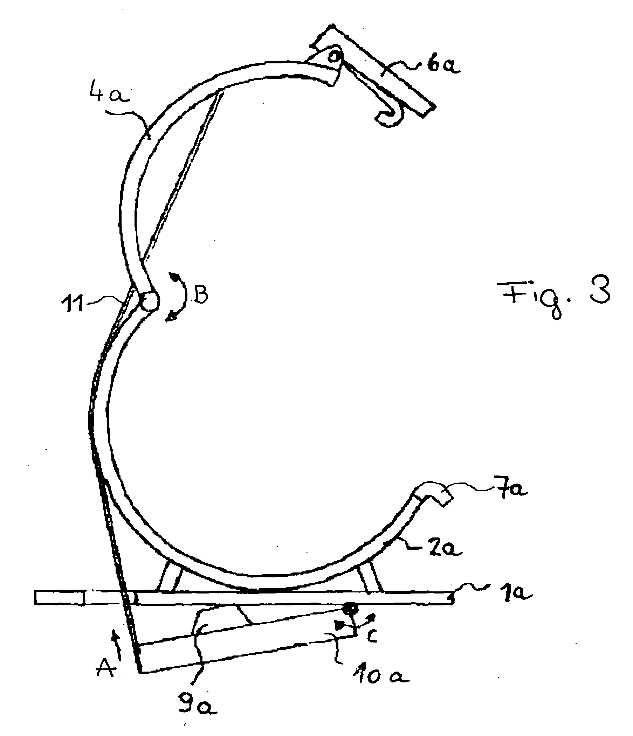

Figur 3 zeigt eine andere Ausführung der Erfindung, bei der die Aufnahme 2a für den Treibgasbehälter starr auf einer Grundplatte 1a angeordnet ist. Ein Deckel 4a ist an der Aufnahme 2a gelenkig gelagert und kann mittels eines Schnellspannverschlusses 6a an der Aufnahme 2a verriegelt werden.

Eine Füllstandsmesseinrichtung 9a ist auf einer Halterung 10a angeordnet, welche schwenkbar an der Grundplatte 1a gelagert ist. Die Halterung 10a ist mittels eines flexiblen Zugelements 11, das im vorliegenden Ausführungsbeispiel als Gurt ausgeführt ist, mit dem Deckel 4a verbunden. Wenn der Deckel 4a geschlossen wird, wird diese Bewegung mittels des Zugelements 11 auf die Halterung 10a übertragen, sodass diese nach oben geschwenkt wird und die Füllstandsmesseinrichtung 9a an einen in der vorliegenden Abbildung nicht dargestellten Treibgasbehälter zur Anlage kommt.

Auch bei dieser Anordnung kann das Schließen des Deckels 4a und das Verriegeln des Schnellspannverschlusses 6a an dem ortsfesten Haken 7a mit einem Handgriff erfolgen. Die Füllstandsmesseinrichtung 9a legt sich dabei infolge der mechanischen Koppelung an den Deckel automatisch an den Treibgasbehälter an.

## Patentansprüche

1. Befestigungsvorrichtung für einen Treibgasbehälter (3) an einem Gabelstapler, mit einer Aufnahme (2) für den Treibgasbehälter (3) und einer Füllstandsmesseinrichtung (9) zum Messen des Füllstandes im Treibgasbehälter (3), **dadurch gekennzeichnet, dass** die Füllstandsmesseinrichtung (9) relativ zum Gabelstapler ortsfest angeordnet ist und die Aufnahme (2) für den Treibgasbehälter (3) relativ zu dem Gabelstapler bewegbar ist, derart, dass der in der Aufnahme (2) befindliche Treibgasbehälter (3) durch Bewegen der Aufnahme (2) in Kontakt mit der Füllstandsmesseinrichtung (9) bringbar ist.

2. Befestigungsvorrichtung nach Anspruch 1, **dadurch gekennzeichnet, dass** die Aufnahme (2) fedemd in eine Position vorgespannt ist, in der die Füllstandsmesseinrichtung (9) von dem Treibgasbehälter (3) beabstandet ist.

3. Befestigungsvorrichtung nach Anspruch 1 oder 2, **dadurch gekennzeichnet, dass** ein Mittel zum Fixieren des Treibgasbehälters (3) in der Aufnahme (2) vorgesehen ist, welches ein Spannelement umfasst.

4. Befestigungsvorrichtung nach Anspruch 3, **dadurch gekennzeichnet, dass** das Spannelement (6) derart angeordnet ist, dass der Treibgasbehälter (3) durch Spannen des Spannelements in Kontakt mit der Füllstandsmesseinrichtung (9) bringbar ist.

5. Befestigungsvorrichtung nach Anspruch 3 oder 4, **dadurch gekennzeichnet, dass** das Spannelement einen beweglich angeordneten Schnellspannverschluss (6) und einen relativ zum Gabelstapler ortsfest angeordneten Haken (7) umfasst.

6. Befestigungsvorrichtung nach einem der Ansprüche 1 bis 5, **dadurch gekennzeichnet, dass** das Mittel zum Fixieren des Treibgasbehälters (3) einen gelenkig gelagerten Deckel (4) umfasst, an welchem der Schnellpannverschluss (6) befestigt ist.

7. Befestigungsvorrichtung für einen Treibgasbehälter (3) an einem Gabelstapler, mit einer Aufnahme (2a) für den Treibgasbehälter (3) und einer Füllstandsmesseinrichtung (9a) zum Messen des Füllstandes im Treibgasbehälter (3), wobei die Füllstandsmesseinrichtung (9a) relativ zum Gabelstapler bewegbar ist und die Aufnahme (2a) für den Treibgasbehälter (3) relativ zu dem Gabelstapler ortsfest angeordnet ist, und wobei ein Mittel zum Fixieren des Treibgasbehälters (3) in der Aufnahme (2a) vorgesehen ist, welches ein Spannelement umfasst, welches derart angeordnet ist, dass der Treibgasbehälter (3) durch Spannen des Spannelements in Kontakt mit der Füllstandsmesseinrichtung (9a) bringbar ist, **dadurch gekennzeichnet, dass** das Spannelement einen beweglich angeordneten Schnellspannverschluss (6a) und einen relativ zum Gabelstapler ortsfest angeordneten Haken (7a) umfasst.

8. Befestigungsvorrichtung nach Anspruch 7, **dadurch gekennzeichnet, dass** das Mittel zum Fixieren des Treibgasbehälters (3) einen gelenkig gelagerten Deckel (4a) umfasst, an welchem der Schnellpannverschluss (6a) befestigt ist.

9. Befestigungsvorrichtung nach Anspruch 7 oder 8, **dadurch gekennzeichnet, dass** die Füllstandsmesseinrichtung (9a) mittels eines flexiblen Zugelements (11), beispielsweise mittels eines Stahlbandes oder eines Gurts, mit dem Schnellspannverschluss (6a) verbunden ist.

10. Befestigungsvorrichtung nach Anspruch 9, **dadurch gekennzeichnet, dass** das flexible Zugelement (11) einerseits mit der Füllstandsmesseinrichtung (9a) und andererseits mit dem Deckel (4a) verbunden ist.
